## Europäisches Patentamt

**European Patent Office**

**Office européen des brevets**

(11) Publication number: **0 203 040**
**B1**

## (12) EUROPEAN PATENT SPECIFICATION

(45) Date of publication of the patent specification:
**23.08.89**

(51) Int. Cl.⁴: **F 16 P 1/02,** D 01 G 31/00

(21) Application number: **86830118.5**

(22) Date of filling: **09.05.86**

(54) Accident prevention guard for carding plants of the textile industries and for other uses.

(30) Priority: **21.05.85 IT 941685**

(43) Date of publication of application:
**26.11.86 Bulletin 86/48**

(45) Publication of the grant of the patent:
**23.08.89 Bulletin 89/34**

(84) Designated Contracting States:
**BE CH DE FR GB LI**

(56) References cited:
**GB-A-729 076**
**GB-A-1 101 880**
**GB-A-2 038 438**
**US-A-3 665 846**

(73) Proprietor: **Giuliani, Marcello, Via Cellerese, 33,**
**I-50013 Campi Bisenzio Firenze (IT)**

(72) Inventor: **Giuliani, Marcello, Via Cellerese, 33,**
**I-50013 Campi Bisenzio Firenze (IT)**

(74) Representative: **Mannucci, Gianfranco, Dott.- Ing.,**
**Ufficio Tecnico Ing. A. Mannucci Via della**
**Scala 4, I-50123 Firenze (IT)**

EP 0 203 040 B1

## Description

The invention refers to a work accident prevention guard for a carding plant, comprising a curtain capable of being horizontally removed, consensus means for the plant operation and plant stop means combined with said curtain, and blocking means which prevent the opening of the curtain if all the plant members are not at standstill.

An accident prevention guard of this type for a machine tool is known from GB-A-2 038 438, which relates to a guard gate structure comprising a plurality of panels which are hinged relative to each other. One of the panels is hingedly connected to a support element whereby the gate structure can be mounted upon a support element.

A guard for a carding plant must allow maximum accessibility to the members of the machine, in order to permit their inspection, maintenance and replacement. Said members have in some cases large overall dimensions, so that accessibility is particularly critical. Usually, cards, cardroom assortments and similar textile machines are enclosed in cases of various forms, removably divided into sectors or having doors hinged to the same machines, or anchored to the ground. This involves a great deal of work and a significant loss of time whenever the machine needs servicing or maintenance. Further, the projections, the retention bars and other structures for the above mentioned cases greatly hinder the normal maintenance, often causing accidents. Further, cases of different dimensions and shapes are needed to enclose different machines. Due to the large number of cases needed for protecting the same machine, said cases are not always provided with stopping devices which provide stop of the machine before removing of the case. Thus said cases are likely to be removed when the machine is still in motion, also due to the high inertia of the rotating members of said machines. This is the cause of many serious accidents occurring in working with textile machines.

It is therefore the scope of the invention to provide a work accident prevention guard for carding plants of the above mentioned type, which allows an easy and complete accessibility to all the members of the machines and which, further, permits simple combination with said stop means so as to avoid removal of said guard when the members of the machine are not at a complete standstill.

According to the invention, the work accident prevention guard is characterized in that said curtain is at least in part flexible and capable of being wound on and unwound from a vertical axis rotor; that upper and lower guiding means are provided for the sliding of said curtain during winding and unwinding; and that said upper guide means are movable in order to eliminate their encumbrance after the winding of the curtain on said rotor, to permit accessibility to the members of the carding plant. This guard is extremely easy to open and close, while complete accessibility to the members of the machine is obtained removing the upper guiding means. Further, as the guard is made up of one or two curtains, its combination with stop means and blocking means is very simple, so that a complete safety can be obtained.

Further, the guard according to the invention also provides for an effective protection against dust, which must be prevented from coming out from the carding machine.

Further advantageous features of the invention are set out in the dependent claims.

The invention will be better understood by reading the following description and the attached drawing, which shows a practical non-limitative exemplification of the same invention. In the drawing:

Figs. 1 and 2 show schematically a side view and a plan view of one embodiment of the prevention guard according to the invention;

Fig. 3 shows a plan view of a modified embodiment;

Fig. 4 shows, partially and similarly to Fig. 3, a further embodiment; and

Fig. 5 shows a rough cross-section view.

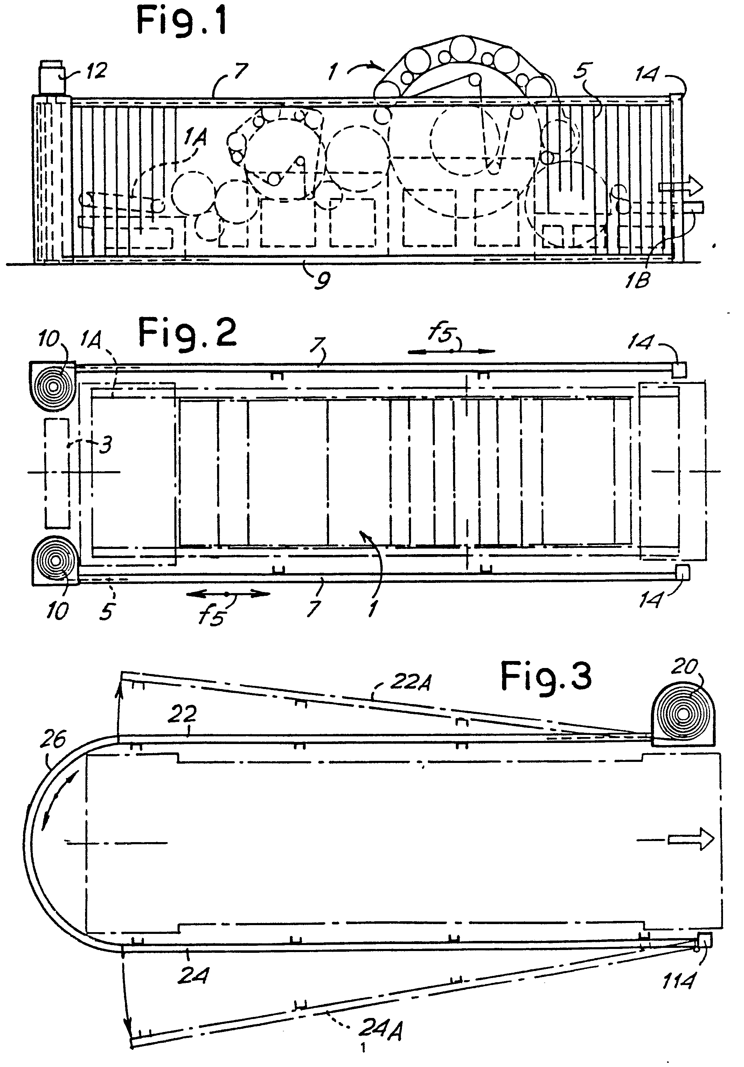

In the drawing (Figs. 1 and 2), a machine to be protected is generally indicated by 1 and the part 1A thereof makes up the entry with feed means (possibly automated) while 1B indicates the exit which may be left open as it does not bring about any particular danger. However, the most dangerous parts are the machine flanks. While the entry end corresponding to the part 1A can be protected by a fixed protection 3, the machine flanks are protected by two flexible curtains 5 (see also fig. 5) sliding in the direction of the double arrows f5 for the closing and the opening. The curtains 5 are guided along upper rails 7 and lower rails 9. The flexible curtains 5 can hang from the rails 7 and be guided by rails 9 or they can be guided by rails 7 and made to rest on rails 9; in the first instance, the rails 9, being of guide only, can be eliminated. The flexible curtains may be made up of vertical slats articulated between them and/or of a flexible continuous structure. In any case, according to Figs. 1 and 2, each curtain can be amassed, that is, wound on a rotor 10 which is advantageously provided at the entry part 1A. Each rotor can amass the respective curtain by winding it through a drive via a motor 12, for example, and each curtain can be manually unwound to protect the respective flank with its accident prevention function; a motorised unwinding drive is also not excluded with, for example, flexible return means provided with an annular cable or other. The two rotors 10 can also be simultaneously operated for the winding up and, therefore, for the uncovering of the machine flanks and possibly also for stretching the respective curtains in the protection arrangement.

The height of curtains 5 may be even lower than a man's height but still of sufficient height to ensure the protective function.

The curtains - when stretched in the protective arrangement - reach terminal stops 14 which define the safety positioning for the accident prevention. To this aim, a contacts and consensus system may be provided cooperating between each of the posts 14 and a terminal rod of the respective curtain. In this way, a double consensus, being cascade-like, that is, in series connected, can be generated to determine the possibility of starting the machine only on the condition that both the curtains are stretched in the protective arrangement, and to block the machine or its dangerous members upon the beginning of the winding operation even for only one of the curtains. An electrical blocking system is also provided which prevents the winding manoeuvre unless all the machine members are at a standstill.

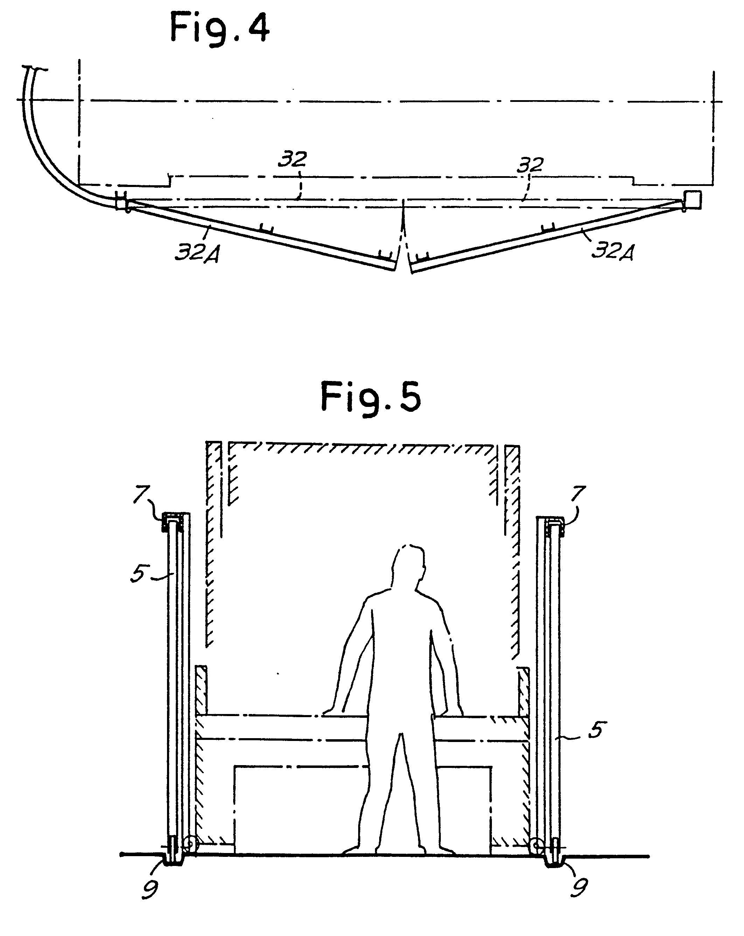

In the embodiment of Fig. 3, instead of two flexible curtains, a single curtain is provided which is wound up on a single rotor 20 and is unwound therefrom by sliding along rails 22, 24, 26, the rail 26 being a connection between rails 22 and 24 and the latter rails being developed along the flanks of the machine to be protected.

A single post 114 acts as a terminal similarly to posts 14 of the preceding example. In this case, the exit is flanked on one side by the rotor 20 and on the other by the post 114, while the feeding occurs from the upper part relative to the curtain.

According to Figs. 3 and 4, provision is made - if necessary and appropriate, for the achievement of the most complete accessibility to the machine - to make the upper rails, as the ones indicated by 22, 24 or those indicated by 32 in Fig. 4, movable from the usage arrangement along and beside the machine, up to a more or less spaced apart arrangement as indicated by 22A, 24A, 32A, in the drawing, or further on, by providing suitably displaceable posts along the floor or other platform surface surrounding the machine, also with possible straight or arched guide means. The movable rails may be displaced parallel to themselves or even and better, angularly displaced. With the removal of the rails an increase is obtained of access freedom to the flanks of the machine or, anyhow, to the machine members without even the limited encumbrances of the aerial rails which, on the other hand, may be positioned at the easiest level in order not to be an obstacle in the accessibility.

## Claims

1. A work accident prevention guard for a carding plant (1), comprising a curtain (5) capable of being horizontally removed, consensus means for the plant operation and plant stop means combined with said curtain, and blocking means which prevent the opening of the curtain if all the plant members are not at standstill; characterized in that said curtain (5) is at least in part flexible and capable of being wound on and unwound from a vertical axis rotor (10; 20); that upper (7; 22, 24; 32) and lower (9) guiding means are provided for the sliding of said curtain during winding and unwinding; and that said upper guide means (7; 22, 24; 32) are movable in order to eliminate their encumbrance after the winding of the curtain on said rotor, to permit accessibility to the members of the carding plant.

2. Guard according to claim 1, characterized in that said curtain is slidingly supported by said lower guide means, and guided by said upper guide means.

3. Guard according to claim 1, characterized in that two flexible curtains can slide along the flanks of the apparatus to be protected, two separate rotors being provided for the winding and unwinding of said curtains.

4. Guard according to claim 1, characterized in that a single flexible curtain (5) is capable of surrounding a flank, one end and the other flank of the apparatus to be protected, one single rotor (20) being provided for winding and unwinding of said curtain.

5. Guard according to the preceding claims, characterized in that motor-driving means (12) are provided for the winding of said curtain.

6. Guard according to the preceding claims, characterized in that motor driving means are provided for the unwinding of said curtain.

## Patentansprüche

1. Schutz zur Arbeitsunfallverhütung für eine Kadieranlage (1), mit einem Vorhang (5), der horizontal bewegbar ist, mit Übereinstimmungsmitteln für den Anlagenbetrieb und Anlagenanhaltemitteln, die mit dem Vorhang verbunden sind, und mit Blockiermitteln, die das Öffnen des Vorhangs verhindern, wenn nicht alle Anlagenteile im Stillstand sind; dadurch gekennzeichnet, daß der Vorhang (5) wenigstens teilweise biegbar ist und geeignet ist, um auf einen Rotor (10; 20) mit vertikaler Achse aufgewickelt und von diesem abgewickelt zu werden; daß obere (7; 22, 24; 32) und untere (9) Führungsmittel für das Gleiten des Vorhangs während des Auf- und Abwickelns vorgesehen sind; und daß die oberen Führungsmittel (7; 22, 24; 32) bewegbar sind, um ihre Hinderlichkeit nach dem Aufwickeln des Vorhanges auf den Rotor zu beseitigen, um die Zugänglichkeit zu den Teilen der Kadieranlage zu ermöglichen.

2. Schutz nach Anspruch 1, dadurch gekennzeichnet, daß der Vorhang durch die unteren Führungsmittel verschiebbar abgestützt ist und durch die oberen Führungsmittel geführt wird.

3. Schutz nach Anspruch 1, dadurch gekennzeichnet, daß zwei biegbare Vorhänge an den abzusichernden Geräteflanken entlanggleiten können, wobei zwei getrennte Rotoren zum Auf- und Abwickeln der Vorhänge vorgesehen sind.

4. Schutz nach Anspruch 1, dadurch <u>gekennzeichnet</u>, daß ein einzelner biegbarer Vorhang (5) geeignet ist, eine Flanke, eine Stirnseite und die andere Flanke des abzusichernden Gerätes zu umgeben, wobei ein einzelner Rotor (20) zum Auf- und Abwickeln des Vorhanges vorgesehen ist.

5. Schutz nach einem der vorstehenden Ansprüche, dadurch <u>gekennzeichnet</u>, daß die Motorantriebsmittel (12) zum Aufwickeln des Vorhanges vorgesehen sind.

6. Schutz nach einem der vorstehenden Ansprüche, dadurch <u>gekennzeichnet</u>, daß die Motorantriebsmittel zum Abwickeln des Vorhanges vorgesehen sind.

## Revendications

1. Dispositif de prévention d'accident dans les usines de cardage (1), comprenant un rideau (5) pouvant être enlevé horizontalement, des moyens d'autorisation générale pour le fonctionnement des équipements et des moyens d'arrêt pour les équipements combinés avec ce rideau, et des moyens de blocage qui empêchent l'ouverture du rideau si la totalité des éléments d'équipement ne sont pas immobilisés,
caractérisé en ce que le rideau (5) est au moins en partie souple et capable d'être enroulé sur et déroulé à partir d'un rotor à axe vertical (10; 20); en ce que des moyens de guidage supérieurs (7; 22, 24; 32) et inférieurs (9) sont prévus pour le glissement dudit rideau pendant l'enroulement et le déroulement; et en ce que lesdits moyens de guidage supérieurs (7; 22, 24; 32) sont mobiles afin de supprimer leur encombrement après l'enroulement du rideau sur ledit rotor, et permettre l'accessibilité aux éléments des équipements de cardage.

2. Dispositif de prévention d'accident selon la revendication 1, caractérisé en ce que le rideau est supporté de façon coulissante par les moyens de guidage inférieurs, et guidé par les moyens de guidage supérieurs.

3. Dispositif de prévention d'accident selon la revendication 1, caractérisé en ce que les deux rideaux souples peuvent coulisser le long des flancs de l'appareil à protéger, deux rotors séparés étant prévus pour l'enroulement et le déroulement des rideaux.

4. Dispositif de prévention d'accident selon la revendication 1, caractérisé en ce qu'un rideau souple unique (5) peut entourer un flanc, une extrémité et l'autre flanc de l'appareil à protéger, un seul rotor (20) étant prévu pour l'enroulement et le déroulement du rideau.

5. Dispositif de prévention d'accident selon les revendications précédentes, caractérisé en ce que les moyens d'entraînement de moteur (12) sont prévus pour l'enroulement de ce rideau.

6. Dispositif de prévention d'accident selon les revendications précédentes, caractérisé en ce que les moyens d'entraînement de roteur sont prévus pour le déroulement du rideau.

# Fig.1

# Fig.2

# Fig.3

# Fig.4

# Fig.5